# EUROPEAN PATENT SPECIFICATION

(11) **EP 2 095 297 B1**
(45) Date of publication and mention of the grant of the patent: **21.10.2015**
(21) Application number: 07833910.8
(22) Date of filing: 07.11.2007
(51) Int. Cl.: G06K 19/07

(54) **APPARATUS AND METHOD FOR ACTION CONTROL OF RFID SYSTEM**
VORRICHTUNG UND VERFAHREN ZUR AKTIONSKONTROLLE EINES RFID-SYSTEMS
APPAREIL ET PROCÉDÉ POUR COMMANDER LE FONCTIONNEMENT DE SYSTÈMES RFID

(30) Priority: 07.11.2006 KR 20060109415
(43) Date of publication of application: 02.09.2009
(73) Proprietor: LG ELECTRONICS INC., Yeongdeungpo-gu Seoul 150-721 (KR)
(72) Inventor: JEUN, Jae Han, Dongjak-gu Seoul (KR)
(74) Representative: Katérle, Axel
(86) International application number: PCT/KR2007/005602
(87) International publication number: WO 2008/056942

(56) References cited:
- WO-A1-2005/029776
- WO-A1-2005/122418
- KR-A- 20060 105 533
- US-A1- 2004 066 278
- US-A1- 2004 124 248
- US-A1- 2005 061 875
- US-A1- 2006 065 740
- US-A1- 2006 087 442
- US-A1- 2006 208 853
- US-B1- 6 340 116

## Description

### Technical Field

The present disclosure relates to an apparatus and a method for controlling an operation of an RFID system that can selectively control communication of the RFID system.

### Background Art

A barcode system and a magnetic card system in the field of identification (ID) recognition have been widely used in our lives in the form of goods, credit cards, and telephone cards. With change in production methods, advances in culture and technology, a smart card and a radio frequency identification (RFID) card improving the credit cards and the telephone cards are gradually used. Particularly, the RFID card is a product that has incorporated use of electromagnetism or electrostatic coupling into a radio frequency of an electromagnetic spectrum portion to identify an object, an animal, or a person. Use of RFID as a technology for replacing a barcode gradually increases in industries. According to the RFID, a direct contact or scanning in a visible band is not required to deliver information.

Generally, an RFID system includes an antenna, a transceiver (mostly included in a reader), and an RFID tag called a transponder. The transceiver uses a radio frequency to deliver a signal for activating the RFID tag. When activated, the RFID tag transmits data to the transceiver through the antenna.

A low frequency RFID system is used for a short transmission range of about less than 1.8 m, and a high frequency RFID system provides a long distance transmission capability of about 27 m or more.

The RFID system includes a non-contact type reader and a tag. The non-contact type reader consistently emits electromagnetic waves having a predetermined frequency, and the tag receives power wirelessly and activated when it reaches the frequency operation range of the reader. The tag that been activated by the above-received power waits for a command from the reader. When a correct command is received, the tag sends a response thereto back to the reader. When the reader sends a command and there is no response from the tag even after a delay time prescribed by a standard passes, communication is not performed any more.

However, a current RFID system has a limitation that a user has a difficulty in aspects of security and selection according to a situation.

That is, the current RFID system reads an RFID tag entering an RFID reader range unconditionally even when it is not intended. For example, when a purse including a plurality of transportation cards reaches an RFID reader, the plurality of transportation cards are used simultaneously. Also, data requiring security should be delivered to only an authorized user. According to a current RFID system reads information contained in a tag unconditionally when a reader is taken to the neighborhood of the tag regardless of security, so that security is difficult to maintain.

WO 2005/122418 A1 discloses a radio tag communication system wherein it is possible to lower the output level of the antenna of a radio tag so as to prevent from unauthorized read-out of the a remote reader.

WO 2005/029776 A1 discloses a home network with an RFID reader.

US 2006/065740 A1 discloses a low cost input module based on a set of RFID tags for storing a user input and switching mechanism for activating the RFID tags.

KR 2006 0105533 A and US 2008/169909 disclose RFID tag reading systems using a password.

US 2004/124248 A1 discloses a method for performing RFID cardholder signature.

US 2004/066278 A1 discloses a method for securing communications in an RFID system.

US 6,340,116 B1 discloses a proximity card with incorporated PIN code protection.

### Disclosure of Invention

### Technical Problem

Embodiments provide an apparatus and a method for controlling an operation of an RFID system by providing an activating element that can selectively determine whether to operate an RFID reader or an RFID tag, and controlling an operation of the RFID reader or the RFID tag depending on selection of the activating element.

### Technical Solution

The invention is defined in the independent claims.

In one embodiment, a method for controlling an operation of a radio frequency identification system including at least one radio frequency identification tag storing predetermined data, and a radio frequency identification reader transmitting/receiving data to/from the radio frequency identification tag, includes: setting a plurality of passwords to at least one of the radio frequency identification tag and the radio frequency identification reader; receiving a password so that data transmission/reception is performed between the radio frequency identification tag and the radio frequency identification reader; and when the received password coincides with one of the set passwords, performing the data transmission/reception characterised in that, when performing the data transmission/reception, the data transmission/reception is performed as a function correponding to the received password and different data are transmitted/received in accordance with the received password.

### Advantageous Effects

An apparatus and a method for controlling an operation of an RFID system according to an embodiment includes an activating element such as a switch allowing data transmission/reception to be selectively performed on at least one of an RFID tag and an RFID reader to selectively transmit/receive data.

Also, a plurality of passwords is set to at least one of the RFID tag and the RFID reader, so that data can be transmitted/received only when the password that coincides with one of the set plurality of passwords is input.

Also, the password is matched with specific data, so that different data can be transmitted/received according to inputting of the password.

### Brief Description of the Drawings

Figs. 1 to 3 are views of an RFID system.
Fig. 4 is a view of an RFID system.
Fig. 5 is a view of an RFID system according to an embodiment.
Fig. 6 is a view of a local area network system according to yet another embodiment.

### Best Mode for Carrying Out the Invention

Reference will now be made in detail to the embodiments of the present disclosure, examples of which are illustrated in the accompanying drawings.

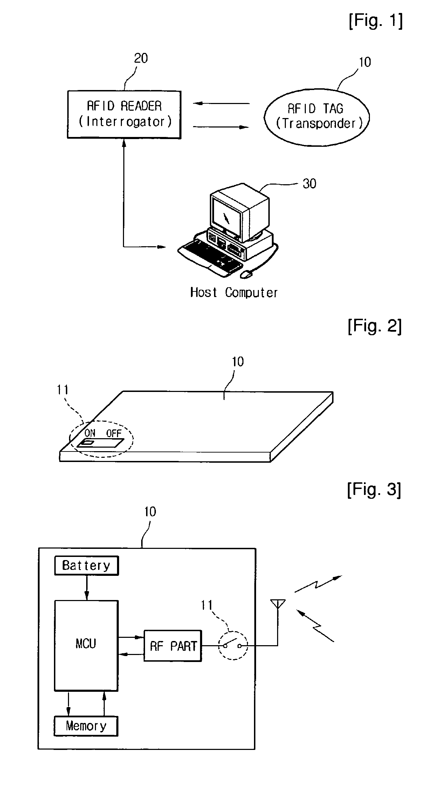

Fig. 1 is a view of an RFID system.

Referring to Fig. 1, the RFID system includes an RFID tag (transponder) 10 storing data, an RFID reader (interrogator) 20 transmitting/receiving data to/from the RFID tag, reading the data, and transmitting the read data to a host computer, and the host computer (server) 30 comparing the data transmitted from the RFID reader 20 with a database stored in advance to provide necessary service. The RFID tag 10 includes an activating element 11 such as a switch that can selectively determine whether to transmit data.

Here, the data stored in the RFID tag can be data related to production, distribution, storage, and consumption allowing information of a specific item to be checked.

Data communication between the RFID tag 10 and the RFID reader 20 is performed through radio communication. The RFID tag includes a memory storing data, an integrated circuit (IC), a microprocessor, and an antenna. The RFID tag is categorized into an active tag and a passive tag depending on whether an energy source exists inside the tag.

Since the active tag includes a power supply unit of its own, it can be recognized at a considerably long distance in comparison with the passive tag receiving power through an induction current of the RFID reader.

The above-described RFID system includes an activating element 11 such as a switch that can switch between on/off states of the RFID tag to selectively control an operation of the RFID tag.

For example, the activating element 11 such as a switch is provided to the RFID tag 10 as illustrated in Fig. 2 so that it can be selectively switched to ON and OFF. In case of ON, data transmission/reception to and from the RFID reader can be performed. In case of OFF, data transmission/reception to and from the RFID reader may not be performed.

Therefore, the RFID tag may or may not transmit data in response to the RFID reader depending on the state (ON/OFF) of the activating element that can select whether to transmit data.

Also, the active tag having an energy source (e.g., battery) inside the tag as illustrated in Fig. 3 is described for example. Since the functions of respective devices forming the tag are known in the art, detailed descriptions thereof are omitted. The activating element 11 such as a switch is provided in a connection portion between an RF part of the tag 10 and the antenna to selectively on/off whether to transmit data of the tag.

Here, the activating element 11 can be provided between devices related to data transmission to the RFID reader, not in a connection portion between the RF part of the tag 10 and the antenna, to selectively on/off whether to transmit data of the tag.

### Mode for the Invention

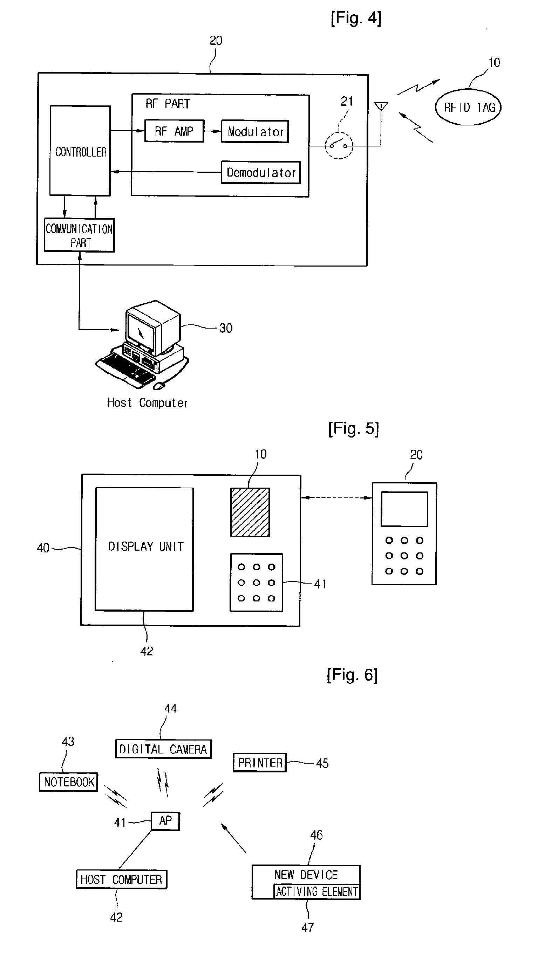

Fig. 4 is a view of an RFID system. Detailed descriptions of elements common to the RFID system of Fig. 1 are omitted.

Referring to Fig. 4, the RFID system includes an RFID tag (transponder) 10 storing data, an RFID reader (interrogator) 20 transmitting/receiving data to/from the RFID tag, reading the data, and transmitting the read data to a host computer, and the host computer (server) 30 comparing the data transmitted from the RFID reader 20 with a database stored in advance to provide necessary service. The RFID reader 20 includes an activating element 21 such as a switch that can selectively determine whether to transmit data.

The RFID reader 20 includes an antenna for obtaining data stored in a tag, an RF part, a controller, a communication part connecting to a host computer (server), and the activating element 21 such as a switch that can selectively request the tag for data transmission. Since the functions of the respective devices forming the reader are known in the art, detailed descriptions thereof are omitted.

Data communication between the tag 10 and the reader 20 is performed through radio communication. Radio signals between the reader and the tag is transmitted/ received using various modulation methods of changing an amplitude, a frequency, or a phase. The various modulation methods include amplitude shift keying (ASK), frequency shift keying (FSK), and phase shift keying (PSK). The radio signal in the form of base signals are converted into high frequency signals, and transmitted.

Here, a magnetic field formed between a reader antenna coil (first side) and a tag antenna coil (second side) can supply power from the reader to the tag. With this energy, data stored in a memory inside the tag can be transmitted to the reader through the antenna of the tag.

Then, the reader receives data input from the tag. When the data is processed, the controller inside the reader examines whether the received signal is reasonable, converts the signal judged as reasonable into data signal, and transmits the converted data signal to the host computer. The host computer compares the data signal with a database stored in advance to provide necessary service.

As described above, the activating element such as a switch selectively performing data transmission/reception to/from the tag from/to the reader is provided, so that the reader can be operated in a sleep mode.

That is, though the power of the reader is on, data transmission/reception operations may not be performed according to ON/OFF of the switch.

For example, in case of an RFID reader that can operate as a universal remote controller controlling various products, when a user gets close to a television (TV) to use the RFID reader as a TV remote controller, the RFID reader receives a TV channel control map from a tag attached on the TV to serve as the TV remote controller. However, when the user carrying the RFID reader moves to a digital versatile disk (DVD) product, the RFID reader receives a DVD channel map from a tag attached on the DVD product to serve as a DVD remote controller. In this case, though the user desires to use the RFID reader as the TV remote controller, the RFID reader receives a channel map of a specific product located at a place the user moves to regardless of selection of the user, so that the RFID reader cannot serve as the TV remote controller.

That is, the activating element 21 such as a switch between the antenna and the RF part in Fig. 4 is provided to on/off an RFID communication state of the reader so that the reader does not perform request and reception operations of tag information. When the activating element 21 is on, the reader performs communication with the tag. When the activating element 21 is off, the reader operates in a sleep mode and does not perform communication with the tag tho ugh the power of the reader is on.

Here, the activating element 21 can be provided between devices related to data transmission to the tag, not in a connection portion between the RF part and the antenna, to on/off whether to transmit data.

Fig. 5 is a view of an RFID system according to an embodiment. Detailed descriptions of elements common to the RFID system of Figs. 1 and 2 are omitted.

Referring to Fig. 5, the RFID system includes a data module 40 and an RFID reader (interrogator). The data module 40 includes a key input unit 41 setting a password to an RFID tag, a display unit 42 displaying input data from the key input unit 42 on a screen, and receiving a password through a touch pad method, and an RFID tag 10 storing the set password and performing a data transmission operation when a password coinciding with the set password is received. The RFID reader transmits/ receives data to/from the RFID tag 10 to transmit the data to a host computer (server).

A password of the RFID tag is set using the key input unit 41, and the data module 40 sets whether to transmit/receive data using the password.

In detail, when the RFID reader approaches, the tag is activated, and communication is activated so that data transmission/reception can be performed between the RFID reader and the tag. That is, the RFID tag is recognized by the RFID reader, or the function of the tag is displayed through a device such as a display attached on the tag, or the reader reads data of the tag in advance. After that, the data stored in the tag are transmitted to the reader. At this point, when the data module is set to use a password, the data module requests input of the password. The data module transmits the data stored in the tag to the reader only when a password coinciding with the set password is input.

For example, a password is set/received to the tag through insertion/contact of the tag to/with the data module 40. The tag can transmit/receive data when the password coincides with the set password.

The password set through the key input unit 41 can be stored in a memory of the tag, and a microprocessor of the tag transmits/receives data to/from the reader when a password coinciding with the set password is input.

Depending on an embodiment, the data module 40 into which the tag can be used as one tag. That is, the password can be set through the key input unit 41 of the data module 40 in which the tag has been mounted, or the password can be input through the key input unit 41 with the data module 40 itself allowed to access the reader.

Here, the password is matched to specific data so that different data can be transmitted to the reader according to the password.

Also, a password is set to the RFID reader, and the RFID reader can be allowed to transmit/receive data to/from the tag only when a password coincides with the set password.

Also, various passwords are set to the RFID reader, so that data communication with an RFID tag corresponding to a relevant password can be selectively activated depending on a password input to the RFID reader. For example, it is assumed that the RFID reader is a lock and the RFID tag is a card for a key. When a password is input to the RFID reader while the RFID tag is taken to the RFID reader, the lock of the RFID reader is opened. At this point, different passwords are set to a plurality of RFID tags. That is, a password of AAA is set to a tag No.1, and a password of BBB is set to a tag No.2. At this point, the password of AAA should be input while the tag No. 1 is taken to the RFID reader to open the lock. When the password of BBB is input to the RFID reader while the tag No. 1 is taken to the RFID reader, the lock is not opened.

Also, various passwords are set to one tag, and data given and taken are different depending on a password input through the tag.

For example, various information, e.g., transportation card information and personal ID information are input to one tag, and passwords for the transportation card information and the personal ID information are set differently. For example, a password for the transportation information is set as XX, and a password for the personal ID information is set as YY. In this case, the password of XX should be input to the tag while the tag is taken to a reader for transportation card to pay transportation costs. When the password of YY or other password is input to the tag, the transportation costs are not paid.

In this case, various functions can be performed by one RFID tag using a plurality of passwords stored in one tag.

That is, when the tag contacts the reader and simultaneously the password of XX is input, the RFID reader can be used as a reader for a transportation card. When the tag contacts the reader and simultaneously the password of YY is input, the RFID reader can be used as an ID information input unit inputting personal ID information.

Therefore, the present disclosure can selectively transmit/receive data using the RFID system.

That is, the active element 11(21) is provided to at least one of the RFID tag and the RFID reader to selectively transmit/receive data.

Also, a password is set to at least one of the RFID tag and the RFID reader. Data transmission is performed only when a password coinciding with the set password is input, so that convenience in using the RFID system can increase.

The RFID tag or the RFID reader including the activating element according to an embodiment can be applied to various short distance communication systems.

For example, wireless fidelity (Wi-Fi) protected setup (WPS) proposes a method of registering devices through near field communication (NFC) so that a user does not need to manually input personal identification numbers (PINs) of the devices when setting up a system using devices for near field radio communication.

For example, Fig. 6 illustrates a network system including devices supporting the WPS. The network system can include an access point (AP) 41 serving as a registar of the WPS, a host computer 42 connected to the AP 41 to control the AP 41, and peripheral devices wirelessly (for example, through Wi-Fi) connected to the AP 41. The peripheral devices can include a notebook 43, a digital camera 44, and a printer 45 supporting the WPS.

In the network system illustrated in Fig. 4, the notebook 43, the digital camera 44, and the printer 45 support the WPS. The AP 41, which is a registar, recognizes unique device numbers, e.g., PINs of the peripheral devices to register the peripheral devices.

According to the NFC proposed by the WPS, a user does not need to input the PINs of the peripheral devices to register the peripheral devices in the registar. Instead, all the user has to do is to get a peripheral device to be registered close to the AP 41, which is the registar.

However, when the peripheral device is got close to the AP 41 with both the peripheral device and the AP 41 activated, the peripheral device may be registered in the AP 41 even when the user does not want.

Therefore, an activating element 47 is mounted in a new device 46 to be registered, so that registration can be made only when the activating element 47 is activated.

The activating element 47 can be activated according to a password input through a password input unit provided to the new device. The activating element 47 can be disposed in the AP 41, which is a registar.

With this construction, the user can control whether to register a new device when registering the new device in a network system.

Although embodiments have been described with reference to a number of illustrative embodiments thereof, it should be understood that numerous other modifications and embodiments can be devised by those skilled in the art that will fall within the scope of the claims. More particularly, various variations and modifications are possible in the component parts and/or arrangements of the subject combination arrangement within the scope of the appended claims.

## Claims

1. A method for controlling an operation of a radio frequency identification, RFID, system comprising at least one radio frequency identification tag (10) storing predetermined data, and a radio frequency identification reader (20) transmitting/receiving data to/from the radio frequency identification tag (10), the method comprising:
setting a plurality of passwords to at least one of the radio frequency identification tag and the radio frequency identification reader (20);
receiving a password so that data transmission/reception is performed between the radio frequency identification tag (10) and the radio frequency identification reader (20); and
when the received password coincides with one of the set plurality of passwords, performing the data transmission/reception,
**characterised in that**, when performing the data transmission/reception, the data transmission/reception is performed as a function corresponding to the received password and different data are transmitted/received in accordance with the received password.

2. The method according to claim 1, further comprising transmitting/receiving data between each set radio frequency identification tag (10) and the radio frequency identification reader (20) according to the password.

3. The method according to claim 1, wherein the receiving of the password comprises:
receiving the password through the radio frequency identification reader (20); and
performing data transmission/reception to perform a function corresponding to the received password.

4. The method according to claim 1, wherein the receiving of the password comprises:
receiving the password through the radio frequency identification tag(10); and
transmitting/receiving data when the received password coincides with the password of the radio frequency identification reader (20) connected to the radio frequency identification tag (10).

5. A data module (40) for transmitting/receiving data to/from a radio frequency identification, RFID, reader (20), the data module (40) comprising:
a key input unit (41) for inputting a password; and
an RFID tag (10) for storing a plurality of set passwords and performing data transmission operation,
wherein the RFID tag (10) is configured, when the inputted password coincides with one of the set passwords, to perform the data transmission operation as a function corresponding to the inputted password and
**characterised in that** the RFID tag (10) is further configured, when the inputted password coincides with one of the set passwords, to transmit different data in accordance with the inputted password.

6. The data module (40) according to claim 5, further comprises:
an activating element (11) for switching ON/OFF status of the RFID tag (10) to control an operation of the RFID tag (10) selectively.

7. A radio frequency identification, RFID, reader (20) for transmitting/receiving data to/from a RFID tag (10), the RFID reader (20) comprising:
an antenna for transmitting/receiving RF signal with the RFID tag;
an RF module for processing the RF signal;
a key input unit for inputting a password; and
a control unit for setting a plurality of passwords and controlling the RFID reader to transmit/receive data,
wherein the control unit is configured, when the inputted password coincides with one of the set plurality of passwords, to perform data transmission/reception as a function corresponding to the inputted password, and
**characterised in that** the control unit is further configured, when the inputted password coincides with one of the set plurality of passwords, to transmit/receive different data in accordance with the inputted password.

8. The RFID reader (20) according to claim 7, further comprises:
an activating element (21) for switching ON/OFF status of the RFID reader (20) to control an operation of the RFID reader (20) selectively.

## Patentansprüche

1. Verfahren zum Steuern eines Betriebs eines Radiofrequenz-Identifikation, RFID, -Systems umfassend zumindest ein Radiofrequenz-Identifikationsetikett (10), das vorbestimmte Daten speichert, und einen Radiofrequenz-Identifikationsausleser (20), der Daten an das Radiofrequenz-Identifikationsetikett (10) überträgt/Daten von dem Radiofrequenz-Identifikationsetikett (10) empfängt, wobei das Verfahren umfasst:
Festlegen einer Vielzahl von Passwörtern an dem Radiofrequenz-Identifikationsetikett und/oder dem Radiofrequenz-Identifikationsausleser (20);
Empfangen eines Passworts, so dass Datenübertragung/-empfang ausgeführt wird zwischen dem Radiofrequenz-Identifikationsetikett (10) und dem Radiofrequenz-Identifikationsausleser (20); und
wenn das empfangene Passwort mit einem der festgelegten Vielzahl von Passwörtern übereinstimmt, Durchführen der Datenübertragung/dem Datenempfang,
**dadurch gekennzeichnet** durch, dass, wenn die Datenübertragung/der Datenempfang ausgeführt wird, die Datenübertragung/der Datenempfang als eine Funktion entsprechend dem empfangenen Passwort ausgeführt wird und unterschiedliche Daten in Übereinstimmung mit dem empfangenen Passwort übertragen/empfangen werden.

2. Verfahren nach Anspruch 1, ferner umfassend Übertragen/Empfangen von Daten zwischen jedem festgelegten Radiofrequenz-Identifikationsetikett (10) und dem Radiofrequenz-Identifikationsausleser (20) entsprechend dem Passwort.

3. Verfahren nach Anspruch 1, wobei das Empfangen des Passworts umfasst:
Empfangen des Passworts durch den Radiofrequenz-Identifikationsausleser (20); und
Durchführen von Datenübertragung/-empfang, um eine Funktion entsprechend dem empfangenen Passwort auszuführen.

4. Verfahren nach Anspruch 1, wobei das Empfangen des Passworts umfasst:
Empfangen des Passworts durch das Radiofrequenz-Identifikationsetikett (10); und
Übertragen/Empfangen von Daten, wenn das empfangene Passwort mit dem Passwort des Radiofrequenz-Identifikationsauslesers (20) übereinstimmt, der mit dem Radiofrequenz-Identifikationsetikett (10) verbunden ist.

5. Datenmodul (40) zum Übertragen/Empfangen von Daten an einen/von einem Radiofrequenz-Identifikations-, RFID, -Ausleser (20), wobei das Datenmodul (40) umfasst:
eine Schlüsseleingabeeinheit (41) zum Eingeben eines Passworts; und
ein RFID-Etikett (10) zum Speichern einer Vielzahl von festgelegten Passwörtern und zum Ausführen einer Datenübertragungsoperation,
wobei das RFID-Etikett (10) dazu ausgebildet ist, wenn das eingegebene Passwort mit einem der festgelegten Passwörter übereinstimmt, die Datenübertragungsoperation als eine Funktion entsprechend dem eingegebenen Passwort auszuführen und
**dadurch gekennzeichnet, dass** das RFID-Etikett (10) ferner dazu ausgebildet ist, wenn das eingegebene Passwort mit einem der festgelegten Passwörter übereinstimmt, verschiedene Daten in Übereinstimmung mit dem eingegebenen Passwort zu übertragen.

6. Datenmodul (40) nach Anspruch 5, ferner umfassend:
ein Aktivierungselement (11) zum Schalten eines ON/OFF-Status des RFID-Etiketts (10), um einen Betrieb des RFID-Etiketts (10) wahlweise zu steuern.

7. Radiofrequenz-Identifikations, RFID, -Ausleser (20) zum Übertragen/Empfangen von Daten an ein/von einem RFID-Etikett (10), wobei der RFID-Ausleser (20) umfasst:
eine Antenne zum Übertragen/Empfangen eines RF-Signals mit dem RFID-Etikett;
ein RF-Modul zum Verarbeiten des RF-Signals;
eine Schlüsseleingabeeinheit zum Eingeben eines Passworts; und
eine Steuereinheit zum Festlegen einer Vielzahl von Passwörtern und zum Steuern des RFID-Auslesers, Daten zu übertragen/zu empfangen,
wobei die Steuereinheit dazu ausgebildet ist, wenn das eingegebene Passwort mit einem der festgelegten Vielzahl von Passwörtern übereinstimmt, Datenübertragung/-empfang als eine Funktion entsprechend dem eingegebenen Passwort auszuführen, und
**dadurch gekennzeichnet, dass** die Steuereinheit ferner dazu ausgebildet ist, wenn das eingegebene Passwort mit einem der festgelegten Vielzahl von Passwörtern übereinstimmt, verschiedene Daten in Übereinstimmung mit dem eingegebenen Passwort zu übertragen/zu empfangen.

8. RFID-Ausleser (20) nach Anspruch 7, ferner umfassend:
ein Aktivierungselement (21) zum Schalten eines ON/OFF-Status des RFID-Auslesers (20), um einen Betrieb des RFID-Auslesers (20) wahlweise zu steuern.

## Revendications

1. Procédé de commande d'une opération d'un système d'identification par radiofréquence, RFID, comprenant au moins une étiquette (10) d'identification par radiofréquence stockant des données prédéterminées, et un lecteur (20) d'identification par radiofréquence transmettant/recevant des données à/de l'étiquette (10) d'identification par radiofréquence, le procédé comprenant :
le paramétrage d'une pluralité de mots de passe pour au moins un parmi l'étiquette d'identification par radiofréquence et le lecteur (20) d'identification par radiofréquence ;
la réception d'un mot de passe de façon à ce qu'une transmission/réception de données soit effectuée entre l'étiquette (10) d'identification par radiofréquence et le lecteur (20) d'identification par radiofréquence ; et
lorsque le mot de passe reçu coïncide avec un de la pluralité paramétrée de mots de passe, l'exécution de la transmission/réception de données,
**caractérisé en ce que**, lors de l'exécution de la transmission/réception de données, la transmission/réception de données est exécutée comme une fonction correspondant au mot de passe reçu et différentes données sont transmises/reçues en fonction du mot de passe reçu.

2. Procédé selon la revendication 1, comprenant en outre la transmission/réception de données entre chaque étiquette (10) d'identification par radiofréquence paramétrée et le lecteur (20) d'identification par radiofréquence en fonction du mot de passe.

3. Procédé selon la revendication 1, dans lequel la réception du mot de passe comprend :
la réception du mot de passe par l'intermédiaire du lecteur (20) d'identification par radiofréquence ; et
l'exécution de la transmission/réception de données pour mettre en oeuvre une fonction correspondant au mot de passe reçu.

4. Procédé selon la revendication 1, dans lequel la réception du mot de passe comprend :
la réception du mot de passe par l'intermédiaire de l'étiquette (10) d'identification par radiofréquence ; et
la transmission/réception de données lorsque le mot de passe reçu coïncide avec le mot de passe du lecteur (20) d'identification par radiofréquence connecté à l'étiquette (10) d'identification par radiofréquence.

5. Module de données (40) pour transmettre/recevoir des données à un/d'un lecteur (20) d'identification par radiofréquence, RFID, le module de données (40) comprenant :
une unité (41) d'entrée de clé pour entrer un mot de passe ; et
une étiquette RFID (10) pour stocker une pluralité de mots de passe paramétrés et exécuter une opération de transmission de données,
dans lequel l'étiquette RFID (10) est configurée, lorsque le mot de passe entré coïncide avec un des mots de passe paramétrés, pour exécuter l'opération de transmission de données comme une fonction correspondant au mot de passe entré et
**caractérisé en ce que** l'étiquette RFID (10) est en outre configurée, lorsque le mot de passe entré coïncide avec un des mots de passe paramétrés, pour transmettre différentes données en fonction du mot de passe entré.

6. Module de données (40) selon la revendication 5, comprenant en outre :
un élément d'activation (11) pour commuter sous tension/hors tension le statut de l'étiquette RFID (10) pour commander une opération de l'étiquette RFID (10) sélectivement.

7. Lecteur (20) d'identification par radiofréquence, RFID, pour transmettre/recevoir des données à une/d'une étiquette RFID (10), le lecteur RFID (20) comprenant :
une antenne pour transmettre/recevoir un signal RF avec l'étiquette RFID ;
un module RF pour traiter le signal RF ;
une unité d'entrée de clé pour entrer un mot de passe ; et
une unité de commande pour paramétrer une pluralité de mots de passe et commander le lecteur RFID pour transmettre/recevoir des données,
dans lequel l'unité de commande est configurée, lorsque le mot de passe entré coïncide avec un de la pluralité paramétrée de mots de passe, pour exécuter une transmission/réception de données comme une fonction correspondant au mot de passe entré, et
**caractérisé en ce que** l'unité de commande est en outre configurée, lorsque le mot de passe entré coïncide avec un de la pluralité paramétrée de mots de passe, pour transmettre/recevoir différentes données en fonction du mot de passe entré.

8. Lecteur RFID (20) selon la revendication 7, comprenant en outre :
un élément d'activation (21) pour commuter sous tension/hors tension le statut du lecteur RFID (20) pour commander une opération du lecteur RFID (20) sélectivement.
